(19) Europäisches Patentamt

European Patent Office

Office européen des brevets

(11) Veröffentlichungsnummer: **0 300 393 B1**

(12) **EUROPÄISCHE PATENTSCHRIFT**

(45) Veröffentlichungstag der Patentschrift: **22.01.92**

(51) Int. Cl.⁵: **F16K 5/06**

(21) Anmeldenummer: **88111474.8**

(22) Anmeldetag: **16.07.88**

(54) **Kugelhahn.**

(30) Priorität: **21.07.87 DE 3724100**

(43) Veröffentlichungstag der Anmeldung:
**25.01.89 Patentblatt 89/04**

(45) Bekanntmachung des Hinweises auf die
Patenterteilung:
**22.01.92 Patentblatt 92/04**

(84) Benannte Vertragsstaaten:
**AT BE CH DE ES FR GB IT LI NL**

(56) Entgegenhaltungen:
**EP-A- 0 029 732      EP-A- 0 046 663
DE-A- 2 924 308      DE-U- 7 512 659
DE-U- 8 632 731      DE-U- 8 700 106**

(73) Patentinhaber: **METALPRAECIS BERCHEM + SCHABERG GESELLSCHAFT FÜR METALL-FORMGEBUNG MIT BESCHRÄNKTER HAF-TUNG
Osterfeldstrasse 14
W-4650 Gelsenkirchen-Ückendorf(DE)**

(72) Erfinder: **Berchem, Rütger, Dipl.-Ing. Dr. rer. pol.
Osterfeldstrasse 14
W-4650 Gelsenkirchen(DE)**

(74) Vertreter: **Andrejewski, Walter et al
Patentanwälte Andrejewski, Honke & Partner
Postfach 10 02 54 Theaterplatz 3
W-4300 Essen 1(DE)**

**Beschreibung**

Die Erfindung bezieht sich gattungsgemäß auf einen Kugelhahn, - mit druckfestem Gehäuse mit zumindest einem einlaßseitigen und zumindest einem auslaßseitigen Rohranschlußelement, Ventilkugel aus Sinterkeramik, Ventilsitz, durch eine Wellendichtung des Gehäuses geführter und an die Ventilkugel angeschlossener Betätigungswelle, wobei der Ventilsitz Sitzringe aufweist, die am Gehäuse oder am jeweiligen Rohranschlußelement dichtend unter Zwischenschaltung der Ventilkugel zwischen den Rohranschlußelementen eingespannt sind und unter elastischer Vorspannung an der Ventilkugel anliegen, wobei der am auslaßseitigen Rohranschlußelement angeordnete auslaßseitige Sitzring als Sinterkeramikring ausgebildet ist, der unter Zwischenschaltung einer Dichtung in das Gehäuse eingesetzt und an dem auslaßseitigen Rohranschlußelement federnd abgestützt ist. Unter den Oberbegriff fallen Durchgangsarmaturen mit jeweils einem einzigen einlaßseitigen und auslaßseitigen Rohranschlußelement sowie Mehrwege-Armaturen mit einer Mehrzahl von Rohranschlußelementen.

Der aus dem DE-U 8700 106 bekannte gattungsgemäße Kugelhahn weist einen Ventilsitz aus identisch ausgebildeten, sinterkeramischen Sitzringen auf. Die Kombination aus sinterkeramischem Ventilsitz und sinterkeramischer Ventilkugel zeichnet sich durch hohe Verschleißfestigkeit mit gutem Widerstand gegen Erosion, Abrieb und Kavitation sowie guter Korrosionsbeständigkeit aus. Unbefriedigend ist jedoch die Druckdichtheit der Armatur. Die Praxis zeigt, daß eine gasdichte Armatur mit sinterkeranlischem Ventilsitz und sinterkeramischer Ventilkugel nicht verwirklicht werden kann. Andererseits sind aus der Praxis Kugelhähne in verschiedenen Ausführungen bekannt, bei denen die Sitzringe aus nachgiebigem, insbesondere elastisch verformbarem, Material bestehen. Auch bei diesen Äüsfuhrungen besteht der VentilSitz aus identisch ausgebildeten Sitzringen. Die bekannten Kugelhähne mit aus einem Elastomer gebildenten Ventilsitz haben eine unzreichende Standzeit, insbesondere in abrasiven Medien und bei überkritischer Entspannung des Fluids.

Der Erfindung liegt die Aufgabe zugrunde, einen gattungsgemäßen Kugelhahn anzugeben, der eine hohe Widerstandsfähigkeit gegen Erosion, Kavitation und Abrieb aufweist und als druckdichte, insbesondere gasdichte, Absperrarmatur einsetzbar ist.

Zur Lösung dieser Aufgabe lehrt die Erfindung, daß der am einlaßseitigen Rohranschlußelement angeordnete einlaßseitige Sitzring aus einem nachgiebigen Dichtungswerkstoff besteht. - Die Erfindung geht aus von der Erkenntnis, daß in einer gattungsgemäßen Armatur in erster Linie der auslaßseitige Sitzring durch Verschleiß beansprucht wird. Ausgehend von dieser Erkenntnis besteht die Grundkonzeption der Erfindung darin, von einem Ventilsitz mit identischen Sitzringen abzugehen und den einlaßseitigen sowie den auslaßseitigen Sitzring werkstoffmäßig zu differenzieren. Die Erfindung lehrt daher besondere Werkstoffkombinationen, nämlich die Kombination einer sinterkeramischen Ventilkugel mit einem einlaßseitigen Sitzring aus nachgiebigem Dichtungswerkstoff und mit einem auslaßseitigen Sitzring aus Sinterkeramik. Überraschenderweise gelingt es durch die erfindungsgemäße Werkstoffkombination, einen Kugelhahn zu verwirklichen, der die gute Verschleißfestigkeit sinterkeramischer Armaturen und die gute Dichtwirkung elastomer gedichteter Armaturen vereinigt. Die Erfindung ist nicht auf Durchgangsarmaturen mit jeweils einem Einlaßstutzen und einem Auslaßstutzen beschränkt, sondern umfaßt auch Mehrwege-Armaturen. Es versteht sich, daß in diesem Falle an allen einlaßseitigen Rohranschlußelementen ein einlaßseitiger Sitzring auf nachgiebigem Dichtungswerkstoff und an allen auslaßseitigen Rohranschlußelementen ein auslaßseitiger sinterkeramischer Sitzring anzuordnen ist.

Für den einlaßseitigen Sitzring sind die bekannten elastomeren Dichtungswerkstoffe geeignet. Hierzu gehören neben Perbunan, Viton, Ethylen/Propylen-Copolymeren (EPDM) insbesondere auch Polyurethan und Polytetrafluoräthylen. Die konstruktive Anordnung des einlaßseitigen Sitzrings sollte der Elastizität des Werkstoffs Rechnung tragen. In weiterer Ausgestaltung lehrt die Erfindung, daß der einlaßseitige Sitzring ein gummielastischer Dichtungring ist, der selbstdichtend am Gehäuse anliegt. Eine andere Ausführungsform sieht vor, daß der einlaßseitige Sitzring in ein Sitzringgehäuse eingesetzt ist, das federnd am Rohranschlußelement abgestützt und mit einer Sekundärdichtung am Gehäuse abgedichtet ist. Diese Ausführungsform empfiehlt sich besonders dann, wenn der einlaßseitige Sitzring aus Polytetrafluoräthylen (PTFE) oder einer hochtemperaturbeständigen Dichtungspackung besteht. Diese kann auf Basis von Graphit mit Trägermaterialien, mineralischen Faserwerkstoffen mit Trägermaterialien, beschichtetem Metallgewebe oder Metallgeflecht, gegebenenfalls mit Trägermaterialien, aufgebaut sein. Die Vorteile der Erfindung sind vor allem darin zu sehen, daß der erfindungsgemäße Kugelhahn eine hohe Lebensdauer, insbesondere auch bei Erosions- und Abrasionsbeanspruchungen, mit ausgezeichneter Dichtigkeit vereinigt. Der erfindungsgemäße Kugelhahn ist als gasdichte Absperrarmatur sowohl gegen Überdruck als auch Unterdruck einsetzbar. Bei entsprechender Wahl des Werkstoffes für den einlaßseitigen Sitzring läßt sich der erfindungsgemäße Kugelhahn auch als korrosionsbeständige und hochtemperaturbeständige Armatur ausbilden. Überraschenderweise ist eine Beeinträchtigung der Lebensdauer auch dann nicht zu befürchten, wenn für den einlaßseitigen Sitzring Werkstoffe ausgewählt werden, die eine geringe Verschleißfestigkeit aufweisen.

Im folgenden wird die Erfindung anhand einer lediglich ein Ausführungsbeispiel darstellenden Zeichnung ausführlicher erläutert. Es zeigen in schematischer Darstellung

Fig. 1 einen Längsschnitt durch den erfindungsgemäßen Gegenstand,

Fig. 2 eine weitere Ausführungsform der Erfindung, ebenfalls im Längsschnitt.

Der in den Figuren dargestellte Kugelhahn wird in der angegebenen Pfeilrichtung von einem gasförmigen oder flüssigen Medium durchströmt. Zum grundsätzlichen Aufbau des Kugelhahns gehören ein druckfestes Gehäuse 1 mit einem einlaßseitigen sowie einem auslaßseitigen Rohranschlußelement 2, 3, eine Ventilkugel 4 aus Sinterkeramik, ein aus Sitzringen 5, 6 gebildeter Ventilsitz 7 sowie eine Betätigungswelle 8, die durch eine Wellendichtung 9 des Gehäuses 1 geführt und an die Ventilkugel 4 angeschlossen ist. Die Sitzringe 5, 6 sind am Gehäuse 1 dichtend zwischen den Rohranschlußelementen 2, 3 eingespannt und liegen unter elastischer Vorspannung an der Ventilkugel 4 an.

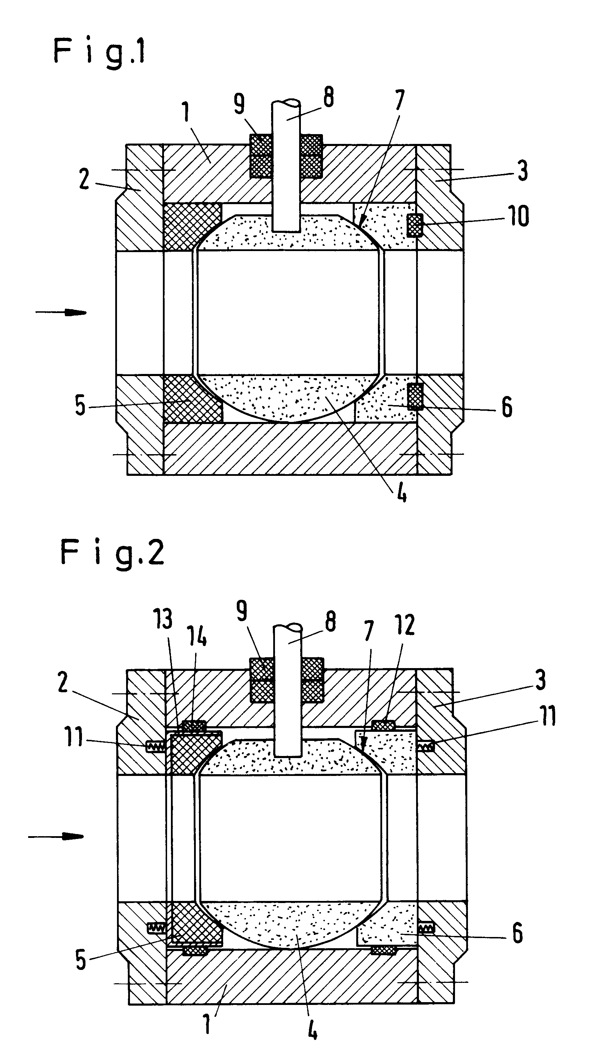

Der am einlaßseitigen Rohranschlußelement 2 angeordnete einlaßseitige Sitzring 5 besteht aus einem nachgiebigen Dichtungswerkstoff, beispielsweise aus einem Polyurethan, Polytetrafluoräthylen, Viton oder einem ähnlichen Werkstoff. Der am auslaßseitigen Rohranschlußelement 3 angeordnete auslaßseitige Sitzring 6 besteht hingegen aus Sinterkeramik und ist als Sinterkeramikring ausgebildet, der unter Zwischenschaltung einer Dichtung 10 in das Gehäuse eingesetzt und an dem auslaßseitigen Rohranschlußelement 3 federnd abgestützt ist. Bei dem in Fig. 1 dargestellten Ausführungsbeispiel ist die Dichtung 10 zugleich als elastisches Element ausgebildet und stellt somit Dichtungselement und Federelement dar. Der einlaßseitige Sitzring 5 ist in diesem Ausführungsbeispiel ein gummielastischer Dichtungsring, der selbstdichtend am Gehäuse 1 anliegt. Bei der in Fig. 2 dargestellten Ausführungsform ist der auslaßseitige Sitzring 6 an einer Druckfeder 11 abgestützt und mantelseitig mit einer Weichdichtung 12 abgedichtet. Der einlaßseitige Sitzring 5 ist in ein Sitzringgehäuse 13 eingesetzt, das federnd am einlaßseitigen Rohranschlußelement 2 abgestützt ist und mit einer Sekundärdichtung 14 am Gehäuse 1 abgedichtet ist. Diese Ausführungsform ist dann zu bevorzugen, wenn der einlaßseitige Sitzring 5 aus einem wenig elastischen Werkstoff besteht. Zu solchen Werkstoffen gehören insbesondere Polytetrafluoräthylen sowie hochtemperaturbeständige Dichtungspackungen.

**Patentansprüche**

1. Kugelhahn mit druckfestem Gehäuse (1), zumindest einem einlaßseitigen und zumindest einem auslaßseitigen Rohranschlußelement (2, 3), Ventilkugel (4) aus Sinterkeramik, Ventilsitz (7) und durch eine Wellendichtung (9) des Gehäuses (1) geführter sowie an die Ventilkugel (4) angeschlossener Betätigungswelle (8), Wobei der Ventilsitz (7) Sitzringe (5, 6) aufweist, die am Gehäuse (1) oder am jeweiligen Rohranschlußelement (2, 3) dichtend unter Zwischenschaltung der Ventilkugel (4) zwischen den Rohranschlußelementen (2, 3) eingespannt sind sowie unter elastischer Vorspannung an der Ventilkugel (4) anliegen, und wobei der am auslaßseitigen Rohranschlußelement (3) angeordnete auslaßseitige Sitzring (6) ein Sinterkeramikring ist, welcher unter Zwischenschaltung einer Dichtung (10) in das Gehäuse (1) eingesetzt und an dem auslaßseitigen Rohranschlußelement (3) federnd abgestützt ist, **dadurch gekennzeichnet,** daß der am einlaßseitigen Rohranschlußelement (2) angeordnete einlaßseitige Sitzring (5) aus einem nachgiebigen Dichtungswerkstoff besteht.

2. Kugelhahn nach Anspruch 1, dadurch gekennzeichnet, daß der einlaßseitige Sitzring (5) als gummielastischer Dichtungsring ausgebildet ist, der selbstdichtend am Gehäuse (1) anliegt.

3. Kugelhahn nach Anspruch 1, dadurch gekennzeichnet, daß der einlaßseitige Sitzring (5) in ein Sitzringsgehäuse (13) eingesetzt ist, das federnd am Rohranschlußelement (2) abgestützt und mit einer Sekundärdichtung (14) am Gehäuse (1) abgedichtet ist.

4. Kugelhahn nach Anspruch 3, dadurch gekennzeichnet, daß der einlaßsseitige Sitzring (5) aus Polytetrafluoräthylen oder einer hochtemperaturbeständigen Dichtungspackung besteht.

**Claims**

1. A ball cock with a pressure-tight housing (1), at least one pipe-connection unit on the inlet side (2) and at least one pipe-connection unit on the outlet side (3), a valve ball (4) of sintered ceramic, a valve seat (7), and an operating shaft (8) led through a shaft seal (9) of the housing (1) and attached to the valve ball (4), in which the valve seat (7) possesses seat rings (5, 6) that are clamped to the housing (1) or to the respective pipe-connection unit (2, 3) forming a seal with the valve ball (4) interposed between the pipe-connection units (2, 3) and fit closely against the valve ball (4) under elastic pressure, and in which the outlet side seat ring (6) located on the outlet side pipe-connection unit (3) is a sintered ceramic ring that is inserted in the housing (1) with interposition of a seal (10) and is resiliently supported against the outlet side pipe-connection unit (3), *characterized in that* the inlet side seat ring (5) located against the inlet side pipe-connection unit (2) consists of a yielding sealing material.

2. A ball cock according to Claim 1, *characterized in that* the inlet side seat ring (5) is constructed as a rubber-like elastic sealing ring that self-seals against the housing (1).

3. A ball cock according to Claim 1, *characterized in that* inlet side seat ring (5) is inserted into a seat ring housing (13) that is resiliently supported against the inlet side pipe-connection unit (2) and is sealed to the housing (1) by a secondary seal (14).

4. A ball cock according to Claim 3. *characterized in that* the inlet side seat ring (5) consists of polytetrafluorethylene or of a sealing packing resistant to high temperatures.

**Revendications**

1. Robinet à tournant sphérique comportant un boîtier (1) résistant à la pression, au moins un raccord de tuyau situé sur le côté admission et au moins un raccord de tuyau situé sur le côté sortie (2,3), un tournant sphérique de vanne (4) formé d'une céramique frittée, un siège de vanne (7) et un arbre d'actionnement (8) traversant un élément d'étanchéité (9) du boîtier (1) et raccordé au tournant sphérique (4), et dans lequel le siège (7) de vanne possède des bagues d'appui (5,6), qui sont fixées par serrage de façon étanche sur le boîtier (1) ou sur le raccord respectif pour tuyau (2,3) moyennant l'interposition du tournant sphérique (4) entre les raccords de tuyau (2,3), et s'appliquent sous précontrainte élastique contre le tournant sphérique (4), et dans lequel la bague d'appui (6) située sur le côté sortie et disposée sur le raccord pour tuyau (3) situé sur le côté sortie est une bague en céramique frittée, qui est insérée dans le boîtier (1) moyennant l'interposition d'un élément d'étanchéité (10) et prend appui élastiquement sur le raccord pour tuyau (3) situé sur le côté sortie, caractérisé en ce que la bague d'appui (5) située sur le côté admission, qui est installée sur le raccord pour tuyau (2) situé sur le côté admission, est réalisée en un matériau d'étanchéité flexible.

2. Robinet à tournant sphérique selon la revendication 1, caractérisé en ce que la bague d'appui (5) située sur le côté admission est réalisée sous la forme d'une bague d'étanchéité présentant l'élasticité du caoutchouc et qui s'applique, en établissant une étanchéité automatique, contre le boîtier (1).

3. Robinet à tournant sphérique selon la revendication 1, caractérisé en ce que la bague d'appui (5) située sur le côté admission est insérée dans un logement (13), qui est prévu pour cette bague, prend appui élastiquement contre le raccord pour tuyau (2), et est étanchéifié au moyen d'un élément d'étanchéité secondaire (14) installé sur le boîtier (1).

4. Robinet à tournant sphérique selon la revendication 3, caractérisé en ce que la bague d'appui (5) située sur le côté admission est réalisée en polytétrafluoroéthylène ou est formée par une garniture d'étanchéité résistante aux températures élevées.

# F i g.1

# F i g.2